(19) Europäisches Patentamt
European Patent Office
Office européen des brevets

(11) Publication number: 0 313 354 A1

(12) EUROPEAN PATENT APPLICATION

(21) Application number: 88309865.9

(51) Int. Cl.[4]: B 01 D 13/04

(22) Date of filing: 20.10.88

(30) Priority: 23.10.87 GB 8724818
29.03.88 GB 8807371

(43) Date of publication of application:
26.04.89 Bulletin 89/17

(84) Designated Contracting States:
AT CH DE ES FR IT LI NL SE

(71) Applicant: PCI MEMBRANE SYSTEMS LIMITED
Laverstoke Mill Whitchurch
Hampshire RG28 7NR (GB)

(72) Inventor: Peer, Martin James
18 Byfleet Avenue
Basing Hampshire (GB)

(74) Representative: Hardisty, David Robert et al
BOULT, WADE & TENNANT 27 Furnival Street
London EC4A IPQ (GB)

(54) **Reverse osmosis membranes and process for their production.**

(57) A thin composite membrane suitable for use in reverse osmosis is formed by the interfacial polymerisation at one surface of a microporous support of a water soluble polyfunctional aliphatic primary amine and a water soluble polyfunctional secondary amine with a polyfunctional acid halide preferably having an average polyfunctionality greater than 2.05, said membrane having been produced using a mole ratio of component (A) to component (B) of less than 1:5. A preferred aliphatic primary amine is 1,2-diaminoethane and the preferred secondary amine is piperazine. By use of the invention a reverse osmosis membrane can be prepared to demineralise cheese whey with the passage of not more than 5% lactose and not less than 25% minerals, or can be used in the treatment of effluent from yeast culture with the passage of no less than 50 to 60% sodium chloride, no more than 0.6% sulphate and no more than 5% chemically oxidizable organic compounds.

EP 0 313 354 A1

## Description

## REVERSE OSMOSIS MEMBRANES AND PROCESS FOR THEIR PRODUCTION

This invention relates to reverse osmosis membranes and processes for their production, and in particular reverse osmosis membranes prepared by interfacial polymerisation of a polyfunctional aliphatic primary amine and a polyfunctional secondary amine with a polyfunctional acid halide.

The advantage of using more than one amine is that the properties of the resulting membrane may be varied easily by varying the relative concentrations of the amines. Thus membranes having a wide range of performance can be produced from the same materials.

The production of copolymerised membranes has been proposed in EP-Al-0014054. The specification discloses the interfacial condensation of polyfunctional secondary amines with polyfunctional acid halides (having a functionality greater than two). A mixture of amines and/or of acid halides may be employed. Particularly preferred amines are piperazine, 2-methyl piperazine and 2,5-dimethylpiperazine; there is also disclosed the use of piperazine with other secondary amines, including substantial amounts of monofunctional secondary amines. It is to be understood that the teachings of this prior specification may, in general, be used in the practice of the present invention described herein, which is concerned with the additional use of the hereinafter defined primary aliphatic amines.

EP-Al-0015149 discloses a sheet comprising a support layer on which is supported a polyamide layer. The polyamide is formed from a polyfunctional acid halide having at least 3 acid halide groups substituted onto an aromatic nucleus of less than three aromatic rings and an "essentially monomeric" polyfunctional aromatic polyamine reactant having at east 2 primary amine substituents on an aromatic nucleus of less than three aromatic rings. The primary amine functionality should be no more than the acid halide functionality and both acid halide and polyamine should be at least 0.01% by weight soluble in water.

The Specification of European Patent Application EP-A-85111 discloses composite semipermeable membranes, processes for the production of such membranes and describes methods for the use of these membranes, in various methods involving reverse osmosis, for example for the treatment of aqueous solution of saccharides, amino acids, alcohols and/or organic carboxylic acids. More particularly, the specification discloses a composite semipermeable membrane comprising a microporous membrane and a cross-linked high polymer membrane formed thereon containing structural units expressed by the following formula (I) at a mole ratio of 50% at the least

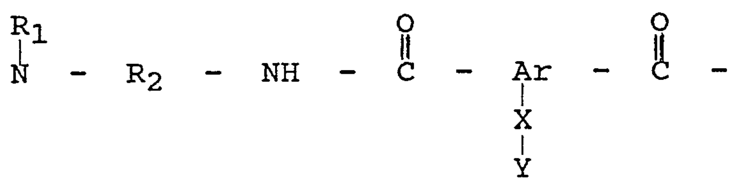

wherein $R_1$ indicates an alkyl group, which may contain a hydroxyl group, having 1 to 3 carbon atoms, or a hydrogen atom; $R_2$ indicates an aliphatic hydrocarbon residue, which may contain an oxygen atom, having 2 to 15 carbon atoms; Ar indicates a condensed or noncondensed aromatic hydrocarbon residue; X indicates a carbonyl bond ($-\overset{O}{\overset{\|}{C}}-$) or a sulfonyl bond ($-SO_2-$); Y at least partly indicates a direct bond where cross-linking takes place and the rest indicates - OM or

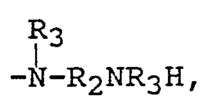

where M indicates a hydrogen atom, alkali metal, alkaline earth metal, or ammonium group, and a definition of $R_3$ is the same as that of $R_1$, at least one $R_3$ being a hydrogen atom. The membranes of specification EP-A-85111 may be formed reacting a water-soluble polyfunctional aliphatic primary amine, such as diaminoethane, and a water-soluble polyfunctional secondary amine, such as piperazine, with a polyfunctional acid halide, such as trimesoyl chloride. Examples 9 to 12 of this prior specification describes the production of composite membranes using mixtures of a diamine, which is piperazine in Example 11, and ethylenediamine using a mole ratio of 1:2.

As is to be seen from the following examples the membranes of the present invention are formed using a

relatively small proportion of a polyamine having primary amino groups relative to the polyfunctional secondary amine. It has been found that exceptionally good results which were not to be anticipated from a consideration of the disclosures in specification EP-A-85111 could be obtained by employing a significant departure from the teachings of this prior specification as hereinafter disclosed.

Accordingly, the present invention provides a thin film composite membrane formed by the interfacial polymerisation at one surface of a microporous support of (A) a water-soluble polyfunctional aliphatic primary amine and (B) a water-soluble polyfunctional secondary amine with (C) a polyfunctional acid halide preferably having an average polyfunctionality greater than 2.05, said membrane having been produced using a mole ratio of component (A) to component (B) of less than 1:5

By "thin film" in the specification we mean a film having a thickness in the range of from 0.05 to 5 µm.

The water-soluble polyfunctional aliphatic primary amine preferably has a maximum molecular weight of 300. Such an aliphatic primary amine is preferably an amine of formula $NH_2-(CH_2)_n-NH_2$ wherein n is from 1 to 4, especially 1 or 2, more preferably the amine is 1,2- diaminoethane. Mixtures of such amines may be used. The water-soluble polyfunctional aliphatic primary amine may be a molecule having one or more other functional group(s) as well as at least two primary amine groups; for example diethylene triamine ($NH_2-C_2H_4NH-C_2H_4NH_2$) is an example of a suitable polyfunctional aliphatic amine. Preferably the aliphatic primary amine has no more than 2 functional amine groups.

The water-soluble polyfunctional secondary amine is preferably piperazine or alkyl substituted piperazine, eg a monomethyl or dimethyl piperazine. Mixtures of these secondary amines may be used in this invention. Also, if desired the mixture from which the membranes are made may contain various amounts, e.g. from 1 to 20 mole %, based on the molar amount of components (A) and (B), of monofunctional secondary amines such as morpholine or dimethylamine, so long as the average functionality of the amine mixture and the ratio of amine equivalents to acid halide equivalents in the prepolymer forming- or polymer-forming reaction is in the desired range, whereby the final membrane composition consists of a high molecular weight, crosslinked, insoluble polymer.

The acid halide functions on the polyfunctional acid halide are preferably attached to an aromatic ring and more preferably the acid halide is 1,3,5 benzene tricarboxylic acid chloride (trimesoyl chloride).

The present invention further relates to a process for making thin film composite membranes by interfacial polymerisation which comprises bringing into contact the components (A) and (B) in an appropriate mole ratio with a solution containing one or more of the above-mentioned acid halides.

Preferably, either the amine or the acid halide solution will be present on the surface at least of a porous support when the other solution is brought into contact with it. More preferably, porous support will have been soaked in the amine solution.

The porous support of the present invention may advantageously be a support film or membrane. Such films and membranes have been extensively described in the prior art and are discussed in EP-B-0015149 at page 9 line 53 to page 10 line 2. Particularly useful in the further process of the present invention are polysulphone films, such as those described in US 3926798 and US 4039440.

The concentration of the amine components (A) and (B) in the amine solution is preferably from 0.0005 to 2.0 wt % and of the acid halide component (C) in its solution is preferably from 0.02, and more preferably from 0.05 to 1.0 wt %.

When the solutions containing the amines and the acid halide are first brought into contact an initial layer of polymer is formed. This initial polymer layer acts as a diffusion barrier through which one of the reactants must pass if further reaction is to occur to produce a film of the desired thickness. As the two amines will diffuse through the film at different rates, the composition of the copolymer produced will depend not only on their relative concentrations in the solution, and their relative rates of reaction with the acid chloride but also on their relative rates of diffusion through the film. It will be necessary to adjust the relative concentration of amines in the solution accordingly.

In particular, a small molecule such as diaminoethane will diffuse more quickly through the film than a larger molecule, such as piperazine. Preferably, therefore, the concentration of the solution of a component (A) amine, such as diaminoethane, is from 0.0025 to 0.0100 wt % and that a component (B) such as piperazine, is chosen so as to give a 1:5 mole ratio as stated above. Preferably the mole ratio of component (A) to component (B) is less than 1:10, and more preferably less than 1:15; however, in general it is desirable that the mole ratio is not less than 1:50, preferably 1:30.

One area in which reverse osmosis membranes are widely used is in the separation or partial separation of solutions containing both dissolved organic compounds and dissolved inorganic salts into predominantly organic and predominantly inorganic solutions. One such application is the partial demineralisation of cheese whey. Another such application is the treatment of effluent generated from the commercial production of yeast. The membranes produced by the invention are suitable for both such purposes.

Preferably the membrane of the present invention when used to demineralise cheese whey will allow no more than 5% lactose and not less than 25% minerals to pass through. In the case of use of the invention in the concentration of effluent generated in the commercial production of yeast preferably the membrane will allow the passage of no less than 50 to 60% sodium chloride, no more than 0.6% sulphate and no more than 5% chemically oxidizable organic compounds. Such a membrane greatly increases the efficiency of the concentration process because the high passage of sodium chloride means the osmosic pressure difference which has to be overcome, is reduced. Further the very low passage of sulphate is a particular advantage

because the filtrate may be fed to an anaerobic digester for the generation of methane fuel and in the digester sulphates are converted to sulphides which contaminate the desired methane product.

The present invention will be further illustrated below with reference to non-limiting examples.

Example 1

A preformed polyethersulphone microporous support is soaked for two minutes in an aqueous solution containing 0.0035 wt % 1,2-diaminoethane and 0.1 wt % piperazine, the mole ratio of component (A) to component (B) being 1 to 19.9.

The support is drained in air for 15 minutes and then immersed for one minute in a 0.1 wt % solution of 1,3,5-benzenetricarboxylic acid chloride in 1,1,2 trichlorotrifluoroethane to form the composite membrane.

The characteristics of the membrane, ie the flux and % solute passage are shown in Table 1. The characteristics were measured at a test pressure of 40.0 bar using a test solution containing 1500 ppm lactose and 5000 ppm calcium chloride.

Examples 2 and 3

The method of example 1 was repeated except that the concentration of 1,2-diaminoethane was 0.0050 wt % and 0.0075 wt % in the amine solution. The mole ratios of component (A) to component (B) in these examples is 1:13.9 and 1:9.3, respectively. The characteristics of these membranes are shown in Table 1.

TABLE 1

| Example | wt % of 1,2-diaminoethane | Flux $1/m^2/hr$ | % solute passage | |
|---|---|---|---|---|
| | | | lactose | Ca $Cl_2$ |
| 1 | 0.0035 | 134.0 | 1.15 | 52.8 |
| 2 | 0.0050 | 98.0 | 0.40 | 38.2 |
| 3 | 0.0075 | 78.2 | 0.31 | 28.1 |

Examples 4 to 7

Additional examples were conducted using the method/of example 1, except that additional primary aliphatic diamines were employed. A comparative example A was carried out using piperazine alone. The concentrations of the amines used to prepare the membranes were 0.100 weight % piperazine and 0.005 weight % primary aliphatic amine. The characteristics of the membranes produced by the comparative example and examples 4 to 7 are shown in Table 2.

TABLE 2

| Examples | Primary aliphatic diamine | Flux 15°C $1/m^2$ hr. | % solute passage | |
|---|---|---|---|---|
| | | | lactose | calcium chloride |
| A (Comparative) | none | 174.0 | 18.80 | 80.8 |
| 4 | 1,4 diaminobutane | 94.1 | 0.81 | 62.5 |
| 5 | 1,2 diaminocyclohexanme | 135.0 | 8.20 | 74.2 |
| 6 | diethylenetriamine | 146.0 | 0.96 | 67.8 |
| 7 | triethylenetetramine | 159.0 | 0.46 | 71.7 |

As indicated above, in order to be of good practical utility for the partial demineralisation of cheese whey, it is preferred that the membrane when tested should ideally have a lactose passage of less than 5.0% and a mineral especially calcium chloride passage of greater than 25.0%. However it is to be noted that a membrane with a lactose passage of less than 15% and a calcium chloride passage of greater than 20.0% would still, however, be useful.

It is preferred that the water-soluble polyfunctional aliphatic primary amine has a molecular weight of less than 300, and it is further preferred that the primary amine, whether linear or branched is one having from 1 to 8 carbon atoms. The water-soluble, polyfunctional aliphatic primary amine will have at least two and preferrably not more than four primary amine groups and they may, as is shown in examples 6 and 7, include one or more secondary amine groups, as is the case with diethylenetriamine and triethylenetetramine. Furthermore, the water-soluble polyfunctional aliphatic primary amine may be a cycloaliphatic compound with 1 to 3 rings and with at least 2 and preferably not more than 4 primary amine groups.

The polyfunctional acid halide may include 1,3-and 1,4-benzene dicarboxylic acid chlorides and these will be

used in combination with an acid halide of higher polyfunctionality so that the acid halide components used to make the thin film composite membrane preferably has an average polyfunctionality greater than 2.05. For example mixture of 1,3,5 -benzenetricarboxylic acid chlorides with isophthaloyl chloride may be used, such as a 50:50 molar mixture. It is to be noted further that in the examples the acid chlorides may be replaced by the corresponding acid bromides.

It is to be noted that a wide range of mole ratios of component (A) to component (B) may be employed in practising this invention; the mole ratio of, for example, diaminoethane to piperazine vary as low as 1:100.

The invention also includes membranes substantially as described in the examples, and it will be understood by those skilled in the art that a membrane produced from the components described but with a variation in the mole ratios of ± 2% are to be regarded as "substantially as described".

**Claims**

1. A thin film composite membrane formed by the interfacial polymerisation at one surface of a microporous support of (A) a water-soluble polyfunctional aliphatic primary amine and (B) a water-soluble polyfunctional secondary amine with (C) a polyfunctional acid halide preferably having an average polyfunctionality greater than 2.05, characterised in that said membrane has been produced using a mole ratio of component (A) to component (B) of less than 1 to 5.

2. A thin film composite membrane as claimed in claim 1 characterised in that the maximum molecular weight of the aliphatic primary amine is 300.

3. A thin film composite membrane as claimed in any one of the preceding claims characterised in that the water-soluble aliphatic primary amine is an amine of formula $NH_2-(CH_2)_n-NH_2$ wherein n is from 1 to 4, preferably 1,2-diaminoethane.

4. A thin film composite membrane as claimed in any one of the preceding claims characterised in that the water-soluble polyfunctional secondary amine is piperazine or alkyl substituted piperazine.

5. A thin film composite membrane as claimed in any preceding claim characterised in that the polyfunctional acid halide is 1,3,5 benzenetricarboxylic acid chloride.

6. A thin film composite membrane as claimed in any one of the preceding claims characterised in that the mole ratio of component (A) to component (B) is from 1:7.5 to 1:50, more preferably from 1:7.5 to 1:30.

7. A thin film composite membrane as claimed in claim 6 characterised in that the mole ratio is from 1:8.5 to 1:10.5, or from 1:12.5 to 1:15 and component (A) is diaminoethane and component (B) is piperazine.

8. A process for making a thin film composite membrane as claimed in claim 1 by interfacial polymerisation which comprises bringing into contact two solutions, the first of which contains (A) a water-soluble polyfunctional aliphatic primary amine and (B) a water-soluble polyfunctional secondary amine and the second of which contains (C) a polyfunctional acid halide characterised in that the combined concentration of amines in the amine solution is from 0.0005 to 2.0 wt. %, the concentration of the acid chloride in its solution is from 0.05 to 1.0 wt. % and the concentration of the polyfunctional aliphatic primary amine in the amine solution is from 0.0025 to 0.0100 wt. %.

9. A process as claimed in claim 8 characterised in that the concentration of polyfunctional secondary amine in the amine solution is about 0.100 wt. %.

10. The use of a thin film composite membrane as claimed in any one of claims 1 to 7 for the demineralisation of cheese whey wherein said membrane will allow the passage of not more than 5% lactose and not less than 25% minerals.

11. The use of a thin film composite membrane as claimed in any one of claims 1 to 7 for the treatment of effluent generated by the commercial production of yeast wherein said membrane will allow the passage of no less than 50 to 60% sodium chloride, no more than 0.6% sulphate and no more than 5% chemically oxidizable organic compounds.

European Patent Office

# EUROPEAN SEARCH REPORT

Application Number

EP 88 30 9865

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol. 102, no. 18, 6th May 1985, page 54, abstract no. 150549z, Columbus, Ohio, US; & JP-A-59 179 103 (TEIJIN LTD) 11-10-1984, & WPIL, AN 84-296 558 [48], Derwent Public., London, GB<br>--- | 1-11 | B 01 D 13/04 |
| D,A | EP-A-0 085 111 (TEIJIN LTD)<br>* Abstract; claims 1-17; page 14, line 1 - page 15, line 20; example 11; table 3, example 11; table 4, example 11 *<br>----- | 1-11 | |
| | | | TECHNICAL FIELDS SEARCHED (Int. Cl.4) |
| | | | B 01 D |

The present search report has been drawn up for all claims

| Place of search | Date of completion of the search | Examiner |
|---|---|---|
| THE HAGUE | 13-12-1988 | HOORNAERT P.G.R.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document